# EUROPEAN PATENT APPLICATION

(11) **EP 4 140 969 A1**
(43) Date of publication of application: **01.03.2023**
(21) Application number: 22192331.1
(22) Date of filing: 26.08.2022
(51) Int. Cl.: C04B 40/00, C04B 28/16, C04B 111/20, C04B 111/34, C04B 111/70, C04B 111/27

(54) **POWDERED COMPOUND FOR THE MODIFICATION OF INORGANIC CEMENT MIXTURES FOR THE LODGING OF NON-BALLASTED REINFORCEMENT SYSTEMS**

(30) Priority: 26.08.2021 IT 202100022379
(71) Applicant: Wegh Group S.p.A., 43045 Fornovo di Taro (Parma) (IT)
(72) Inventor: SENSI, Daniel, Bonate Sopra (Bergamo) (IT)
(74) Representative: Biggi, Cristina

(57) **Abstract**

The present invention relates to a composition to be used as an additive for mortars, preferably for mortars for the bedding of railway platforms, preferably ballastless railway platforms. The present invention also relates to a mortar obtained by mixing said composition with water, polymeric fibres, aggregates and cement or a premixed mortar to be rehydrated comprising said composition, polymeric fibres, aggregates and cement, to which water is added at the time of use. The subject matter of the present invention also relates to a cementitious conglomerate obtained from the mortar of the invention, once hardened.

## Description

The present invention relates to a composition to be used as an additive for mortars, preferably for mortars for the bedding of railway platforms, preferably ballastless railway platforms. The present invention also relates to a mortar obtained by mixing said composition with water, polymeric fibres, aggregates and cement and a cementitious conglomerate obtained from said mortar, once hardened.

### STATE OF THE ART

The construction of an efficient railway line that can ensure and favour the safe and secure movement of people and goods under any external environmental condition while simultaneously withstanding high loads and vibrations, is a key focus of research and development in the infrastructure sector. The tracks intended for railway vehicle transit extend prevalently longitudinally and are maintained parallel to each other by means of sleepers arranged one after the other at pre-established intervals or else platforms. In the case of platforms, they may be pre-compressed platforms, preferably of the ballastless type. In ballastless railway line sections, said platforms are generally laid on top of a reinforced concrete foundation or a foundation module. A bedding mortar is generally injected between the platforms and the foundation or the foundation module; it comprises a cementitious mortar, typically concrete, which, after hydration binds the structure and stiffens it. As is known, the aforesaid railway platforms must be capable of complying with the most severe classes of environmental exposure. In addition, such systems also require, besides mechanical and durability characteristics, that the mortar for bedding the platforms have "self-levelling" characteristics with high "passing ability", in particular as regards the stopper area, in order to ensure that small thicknesses and spaces are correctly filled. Thus, at the present state of the art, there remains a need to provide a mortar for infrastructure installation, preferably for the bedding of railway platforms, preferably of the ballastless type, which is expansive both in the plastic phase and in the hardened phase in order to be able to effectively induce a chemical pre-compression in the bedding layer, and which is capable of compensating for the subsequent autogenous and hygrometric shrinkage that characterizes standard cementitious formulations. There is a further need to provide a mortar that ensures both the dimensional stability of the element connecting between the foundation and the platforms and a reduction in the risk of crack formation in the intermediate layer, also in the case of the construction of long sections, since the internal stresses of the conglomerate obtained with the mortar, resulting from exposure to unsaturated environments, are always positive, i.e. compression stresses, never tensile ones.

Chinese patent application CN102503324 in the name of Beijing New Zhongyan Building Materials Technology Co Ltd describes an anchorage material that comprises sulphoaluminate cement clinker, anhydrite, a PCE superplasticizer, a polysaccharide rheology modifier and microsilica.

The present invention solves the above-described problems by providing an additive for cementitious mortars that enables the production of conglomerates having characteristics not only of mechanical strength, but also of resistance to chemical agents, thus allowing for optimal bedding of railway platforms, preferably of the ballastless type, and the creation of a final railway installation delivering the desired performance.

### SUMMARY OF THE INVENTION

The present invention relates to a composition to be used as an additive for mortars, preferably for mortars for the bedding of railway platforms, preferably ballastless railway platforms. The composition of the invention comprises:
- a first mineral addition comprising at least one calcium carbonate (CaCO₃) filler;
- a second mineral addition selected from the group consisting of: microsilica (SiO₂), fly ash, blast furnace slag, pozzolan, geopolymers, and a combination thereof;
- at least one superplasticizer selected from the group of polycarboxylate ethers (PCE), preferably methacrylate substituted with polyoxymethylene;
- at least one shrinkage reducing admixture (SRA) selected from a glycol- or polyglycol-based anti-shrinkage additive, preferably selected from the group consisting of: hexylene glycol, polypropylene glycol, neopentyl glycol, polyoxypropylene glycol, and a combination thereof;
- at least one rheology modifier selected from the group of exopolysaccharides, preferably selected from the group consisting of: Welan gum, gellan gum, or a combination thereof;
- at least one expansive agent selected from among calcium sulphoaluminate (CSA), calcium sulphate dihydrate, calcium oxide (CaO), magnesium oxide (MgO), and a combination thereof;
- anhydrite (anhydrous calcium sulphate); and
- at least one at least one calcium sulphoaluminate clinker (CSAK). The present invention also relates to a mortar obtained by mixing said composition with water, polymeric fibres, aggregates and cement. The subject matter of the present invention further relates to a pre-mixed mortar to be rehydrated, that is, a mortar in a dry state comprising said composition, polymeric fibres, aggregates and cement, which, at the time of use, is mixed with water in order to obtain the desired mortar, preferably a mortar for the bedding of railway platforms, preferably ballastless railway platforms. The subject matter of the present invention also relates to a cementitious conglomerate obtained from the mortar according to the present invention, once hardened.

### BRIEF DESCRIPTION OF THE DRAWINGS

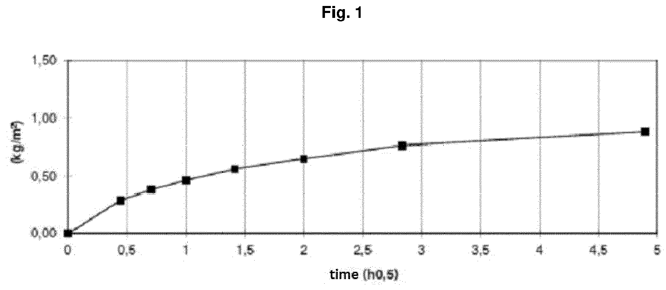

Figure 1 shows the capillary absorption curve of cementitious conglomerates obtained from the mortar according to the present invention and immersed in demineralised water at a temperature of 40 °C ± 2 °C, as described in Example 2.

### DETAILED DESCRIPTION OF THE INVENTION

For the purposes of the present invention, the term "microsilica" is used as a synonym that is interchangeable with "silica fume".

For the purposes of the present invention, the term "unsaturated environment" refers to an environment characterized by a relative humidity <95%.

For the purposes of the present invention, the expressions "ballastless railway platforms" or "railway platforms of the ballastless type" are used as perfectly interchangeable synonyms.

For the purposes of the present invention, the term "compound" is used to identify the composition according to any one of the embodiments described below.

For the purposes of the present invention, the term "defoaming agent" is used as a synonym that is interchangeable with "air-detraining agent".

For the purposes of the present invention, the term "Rosin Blend" and the expression "wood resin salts" are used as interchangeable synonyms.

The present invention relates to a composition comprising:
- a first mineral addition comprising at least one calcium carbonate (CaCO₃) filler;
- a second mineral addition selected from the group consisting of: microsilica (SiO₂), fly ash, blast furnace slag, pozzolan, geopolymers, and a combination thereof;
- at least one superplasticizer selected from the group of polycarboxylate ethers (PCE), preferably methacrylate substituted with polyoxymethylene;
- at least one shrinkage reducing admixture (SRA) selected from a glycol- or polyglycol-based anti-shrinkage additive, preferably selected from the group consisting of: hexylene glycol, polypropylene glycol, neopentyl glycol, polyoxypropylene glycol, and a combination thereof;
- at least one rheology modifier selected from the group of exopolysaccharides, preferably selected from the group consisting of: Welan gum, gellan gum, or a combination thereof;
- at least one expansive agent selected from among calcium sulphoaluminate (CSA), calcium sulphate dihydrate, calcium oxide (CaO), magnesium oxide (MgO), and a combination thereof;
- anhydrite (anhydrous calcium sulphate); and
- at least one calcium sulphoaluminate clinker (CSAK).
According to a preferred embodiment, the composition according to the present invention comprises:
- a calcium carbonate (CaCO₃) filler as the first mineral addition;
- microsilica (SiO₂) as the second mineral addition;
- a superplasticizer selected from the group of polycarboxylate ethers (PCE), preferably methacrylate substituted with polyoxymethylene;
- hexylene glycol as a shrinkage reducing admixture (SRA);
- a rheology modifier selected from the group of the exopolysaccharides, preferably Welan gum, gellan gum, or a combination thereof;
- a mixture of calcium sulphoaluminate (CSA) and calcium sulphate dihydrate as an expansive agent;
- anhydrite (anhydrous calcium sulphate); and
- calcium sulphoaluminate clinker (CSAK).

Preferably, said first mineral addition is present within the composition according to the present invention in an amount between 5 and 30% w/w. Preferably, said second mineral addition is present within the composition according to the present invention in an amount between 1 and 11% w/w. Preferably, said at least one superplasticizer is present within the composition according to the present invention in an amount between 1 and 5% w/w.

Preferably, said at least one anti-shrinkage additive is present within the composition according to the present invention in an amount between 1 and 5% w/w.

Preferably, said at least one rheology modifier is present within the composition according to the present invention, in an amount between 0.01 and 2% w/w.

Preferably, said at least one expansive agent is present within the composition according to the present invention, in an amount between 5 and 40% w/w.

Preferably, said anhydrite is present within the composition according to the present invention, in an amount between 5 and 35% w/w.

Preferably, said at least one calcium sulphoaluminate clinker is present within the composition according to the present invention, in an amount between 5 and 35% w/w.

According to a preferred embodiment, the composition according to the present invention is a composition wherein:
- said first mineral addition is present in an amount between 5 and 30% w/w;
- said second mineral addition is present in an amount between 1 and 11% w/w;
- said at least one superplasticizer is present in an amount between 1 and 5% w/w;
- said at least one anti-shrinkage additive is present in an amount between 1 and 5% w/w;
- said at least one rheology modifier is present in an amount between 0.01 and 2% w/w;
- said at least one expansive agent is present in an amount between 5 and 40% w/w;
- said anhydrite is present in an amount between 5 and 35% w/w; and
- said at least one calcium sulphoaluminate clinker is present in an amount between 5 and 35% w/w.

Calcium carbonate is normally considered an aggregate (EN 12620) or a Type 1 addition (EN 206), whose "inert" contribution during the process of hydrating common cementitious mixtures with a single binder mainly performs the role of rheology modifier.

In the composition of the invention, by contrast, calcium carbonate has been introduced to take part in the hydration reaction, i.e. to modify the nature of the hydrated compounds.

The composition of the invention is based on a ternary binder that comprises cement, a CSA cement and calcium sulphate (ye'elimite/anhydrite phases).

It is known that ye'elimite (calcium sulphoaluminate) can react with water in the presence of calcium carbonate, forming ettringite, monocarbonate and aluminium hydroxide.

If calcium sulphate is added to the system to form a ye'elimite/anhydrite/calcium carbonate mixture, as in the present invention, it is possible to increase the amount of ettringite and reduce the monocarbonate, even until it has completely disappeared, as a function of the ratios between the constituents.

Furthermore, by acting on the dose of calcium carbonate, it is also possible to obtain the maximum volumetric concentration of the solids, thereby obtaining benefits through the increase in compressive strength and reduction of the porosity of the hydrated cementitious pastes.

In the composition of the invention, the ratio between ye'elimite and anhydrite in the mixture has been conceived so as to enable the calcium carbonate, introduced as a calcareous filler, to participate in the hydration reaction, in order to obtain the condition of having monosulphate and monocarbonate coexist as desired for the final application of the cementitious system designed.

This variation in the chemical composition of the mixture, which also derives from the introduction of calcium carbonate, significantly influences the amount and type of the solid phases that are formed after the hydration reaction, with direct consequences on the primary and secondary properties of the conglomerate in the hardened state. Hexylene glycol has been introduced as a shrinkage reducing admixture (SRA) in the composition of the invention in order to exploit its properties in a synergistic manner with the expansive agent, with the aim of countering hygrometric shrinkage of the conglomerate of the invention, thus maintaining the chemical pre-compression assured by the expansion of the conglomerate itself, as it limits the losses deriving from the contraction.

Furthermore, the doses of SRA in the composition of the invention enable the desired latency of the hydration reaction to be obtained during the use and application of the conglomerate, thanks to the action that the SRA exerts in modifying the morphology of the ettringite.

Preferably, the composition according to the present invention further comprises:
- at least one accelerating agent selected from the group consisting of: potassium thiocyanate, sodium carbonate, lithium carbonate, and a combination thereof; and/or
- at least one retardant agent selected from the group consisting of: citric acid, tartaric acid, gluconates, and a combination thereof; and/or
- at least one defoaming agent, said defoaming agent preferably being a silicone-based defoaming agent, more preferably said silicone-based defoaming agent comprising hydrophobic silica dispersed in a silicone oil, organic silicon powder, modified polydimethylsiloxane, or a combination thereof.

According to a preferred embodiment, within the composition according to the present invention:
- said at least one accelerating agent is present in an amount between 0.01 and 2% w/w; and/or
- said at least one retardant agent is present in an amount between 0.01 and 2% w/w; and/or
- said at least one defoaming agent is present in an amount between 0.01 and 2% w/w.

Preferably, the composition according to the present invention can further comprise an additive allowing the formation of a plurality of micrometric air bubbles within the composition.

Said additive is preferably selected from: synthetic detergents, lignin sulphonate salts, petroleum acids, organic salts of sulphonated hydrocarbons, vinsol resin, wood resin salts (Rosin Blend), mesoporous single crystal (MSC) hollow microspheres, preferably PVC hollow microspheres, and a combination thereof. According to a preferred embodiment, said additive allowing the formation of a plurality of micrometric air bubbles is present:
- in an amount between 0.01 and 5% w/w if said additive is selected from synthetic detergents, lignin sulphonate salts, petroleum acids, organic salts of sulphonated hydrocarbons, vinsol resin, wood resin salts (Rosin Blend), and a combination thereof;
- in an amount between 1 and 5% w/w if said additive is mesoporous single crystal (MSC) hollow microspheres, preferably PVC hollow microspheres.

For the purposes of the present invention, said additive allowing the formation of a plurality of micrometric air bubbles is also defined as an "air-entraining agent".

The present invention also relates to the use of the composition according to any one of the above-described embodiments as an additive for mortars, preferably for cementitious mortars. Said mortars are preferably expansive mortars for injection or pouring, more preferably selected from mortars for bedding and/or anchoring and/or grouting and/or sealing, preferably of railway platforms or an element thereof. According to a particularly preferred embodiment of the present invention, said railway platforms are pre-compressed railway platforms, more preferably railway platforms of the ballastless type.

The subject matter of the present invention also relates to a mortar obtainable/obtained by mixing the composition according to any one of the above-described embodiments with water, cement, polymeric fibres and aggregates. According to a preferred embodiment, said composition is added in an amount between 2 and 20% w/w; said water is added in an amount between 5 and 15 % w/w; said cement is added in an amount between 10 and 35% w/w: said polymeric fibres are added in an amount between 0.1 and 5% w/w; and said aggregates are added in an amount between 20 and 80% w/w. Said cement is preferably selected from the group consisting of: Portland cement, composite cement, OPC Ordinary Portland cement according to EN 197-1, UNI 9156, UNI 9606, ASTM C150, ASTM C595, JIS R 5210-5211-5212-5213-5214, or a combination thereof. Said polymeric fibres are preferably selected from the group consisting of: polyolefin polymers, polyethylene fibres, polypropylene fibres, aromatic polyamides, aliphatic polyamides, or a combination thereof. Said aggregates are preferably selected from the group consisting of: stones, artificial aggregates, sand, endogenous rocks, exogenous rocks, expanded clay, glass, or a combination thereof, preferably sand. According to a preferred embodiment of the invention, said sand comprises CaMg(CO₃)₂. Said sand preferably consists essentially of CaMg(CO₃)₂, more preferably said sand consists of CaMg(CO₃)₂. According to one embodiment, said aggregates have a size (measurable in terms of particle size) ≤ 4 mm, preferably between 0 and 4 mm. For the purposes of the present invention, said aggregates having a size (measurable in terms of particle size) ≤ 4 mm, preferably between 0 and 4 mm, are also defined as "fine aggregates". Preferably, the mortar of the present invention, according to any one of the above-described embodiments, is an expansive injection mortar. More preferably, said mortar is characterized by being a compensated shrinkage mortar and, in the transition from the fresh state to the hardened state, possessing a capacity to generate an expansion greater than 500 µm/m, preferably between 1000 and 2000 µm/m.

The subject matter of the present invention further relates to a premixed mortar to be rehydrated at the time of use thereof, that is, a mortar comprising the composition according to any one of the above-described embodiments, cement, polymeric fibres and aggregates, also as described above and, preferably, in the above-described amounts. Said premixed mortar to be rehydrated is a mortar in the form of a dry mixture. According to such an embodiment, at the time of use thereof, water is added to said premixed mortar to be rehydrated, preferably in an amount between 5 and 15% w/w (relative to the weight of the dry mixture). According to this embodiment, said mortar, once mixed with water, is a mortar as described above, i.e. a cementitious mortar, preferably an expansive injection mortar, and is preferably characterized by possessing a compensated shrinkage of more than 500 µm/m, preferably between 1000 and 2000 µm/m.For the purposes of the present invention, the expression "mortar in the fresh state" means that said mortar has been hydrated, that is, a mortar that has not yet begun the phases after hydration that lead to the hardening of said mortar. Without wishing to be bound by a specific theory, the Applicant has nonetheless found that the mortar according to any one of the embodiments of the present invention (which is also definable, for the purposes of the present invention, as a fibre-reinforced expansive inorganic cementitious mortar), by virtue of its specific formulation and in particular thanks to the presence of the composition of the invention described above in combination with said cement, said polymeric fibres and said aggregates, proves to be a mortar with controlled shrinkage; this makes it possible to obtain, once it has hardened, cementitious conglomerates (as described below) not only characterized by high mechanical strength, but also endowed with excellent resistance against degradation (resulting from chemical attacks and/or external environmental conditions), which normally afflicts the cementitious conglomerates obtained from standard mortars. As also demonstrated in the following examples section, the products (i.e. the conglomerates) obtainable from the mortar or from the premixed mortar once rehydrated according to any one of the previously described embodiments, prove to be effectively resistant to chemical attacks, the diffusion of chloride ions, both those originating from de-icing salts and of marine origin, and freeze/thaw cycles and/or against the hydrodynamic phenomenon of pumping of the sub-platform bedding layers and/or thermal distortions, as well as the action of solubilisation exerted by leaching water (i.e. they are waterproof) and/or the degrading actions deriving from hydrocarbons and/or lubricant oils.

The subject matter of the present invention further relates to the use of the mortar according to any one of the above-described embodiments for the execution of cementitious works, preferably bedding and/or anchoring and/or grouting and/or sealing, preferably of railway platforms or an element thereof, more preferably pre-compressed railway platforms, even more preferably ballastless railway platforms. In the embodiment wherein said mortar is a premixed mortar to be rehydrated, said use comprises adding water prior to the execution of said cementitious works.

The present invention also relates to a cementitious conglomerate obtained/obtainable from the mortar or premixed mortar to be rehydrated of the present invention according to any one of the above-described embodiments, that is, obtained/obtainable by laying said mortar, and the subsequent hardening thereof. In other words, said cementitious conglomerate is a cementitious conglomerate made with said mortar. In still other words, said cementitious conglomerate is the mortar of the present invention in the hardened state thereof. The cementitious conglomerate of the invention advantageously enables a railway platform to be anchored to the foundations/foundation thereof, thus enabling a final stable, constrained structure to be obtained. Preferably, said railway platform is a pre-compressed railway platform, more preferably of the ballastless type. According to a preferred embodiment of the present invention, said cementitious conglomerate is characterized by possessing at least one of the following characteristics:
(a) resistance to chemical attack, preferably to attack by chlorides and/or sulphates and/or hydrocarbons and lubricating oils;
(b) capillary absorption ≤ 0.5 kg/m² · h0.5;
(c) resistance to the hydrodynamic phenomenon of pumping of the sub-platform layers;
(d) resistance to water, preferably to water comprising one or more of Na⁺, Mg²⁺, Br, Cl⁻, SO₄²⁺, K⁺, Ca²⁺;
(e) resistance to thermal shock and freeze/thaw cycles, preferably resistance to more than 50 freeze/thaw cycles;
(f) tensile strength greater than 2.0 MPa, preferably greater than 2.5 MPa;
(g) compressive elastic modulus ≥ 20 Gpa, preferably ≥ 40 Gpa more preferably ≥ 50 GPa after 28 days of curing;
(h) compressive strength according to UNI EN 12190 ≥ 40 MPa after 1 day of curing, ≥ 50 Mpa after 7 days of curing and ≥ 70 MPa after 28 days of curing;
(i) flexural strength according to UNI EN 196-1 ≥ 6.0 MPa after 1 day of curing and ≥ 10 Mpa after 28 days of curing.

According to a preferred embodiment of the present invention, said cementitious conglomerate is characterized by possessing at least two, preferably at least three, more preferably at least four, even more preferably at least five, even more preferably at least six, even more preferably at least seven, even more preferably at least eight of said characteristics (a)-(i). According to a particularly preferred embodiment, said cementitious conglomerate is characterized by possessing all the characteristics (a)-(i). Without wishing to be bound by a specific theory, the Applicant has nonetheless found that, thanks to the specific compounds selected for the composition used as an additive within the mortar of the invention, it is possible to obtain a final cementitious conglomerate having the desired and suitable mechanical characteristics and characteristics of resistance to chemical and/or physical attacks and/or attacks by external environmental agents which make it possible not only to surpass the standards provided for in the sector, but also to obtain cementitious conglomerates and, preferably, railway platforms having superior properties compared to those obtainable with traditional mortars. Without wishing to be bound by a specific theory, it is nonetheless possible to affirm that the aforesaid properties of resistance to degradation are linked to the fact that the cementitious conglomerates according to the present invention, thanks to the specific formulation of the mortar from which they are obtained, and in particular, thanks to the presence of the composition according to the present invention as an additive within said mortar, possess reaction products that are poorly soluble and thus not easily attacked.

### EXAMPLES

### Example 1 - Comparative experiments

In order to be able to study and quantify the performances of the mortar according to the present invention, cementitious conglomerates were prepared; they were obtained with the premixed mortar to be rehydrated according to the present invention having the composition shown in the following table.

The conglomerates thus obtained were identified with the name "TM Mk 5.0-14".

**Table 1**

| Premixed mortar compounds to be rehydrated of the present invention | | Amount (% w/w) | Density (Kg/m³) | Specific weight (Kg/L) | Volume (L) |
|---|---|---|---|---|---|
| Common name | Chemical compound | | | | |
| Filler | CaCO₃ | 2.89 | 60 | 2.710 | 22.14 |
| Silica fume | SiO₂ | 0.87 | 18 | 2.200 | 8.18 |
| Superplastici zer | Polycarboxy late ether (PCE) | 0.36 | 7.5 | 1.000 | 7.50 |
| Shrinkage reducing admixture - SRA | Hexylene glycol | 0.48 | 10 | 1.020 | 9.80 |
| Rheology modifier | Exopolysac charide | 0.01 | 0.28 | 1.000 | 0.28 |
| Anhydrite | CaSO₄ | 1.44 | 30 | 2.300 | 13.04 |
| CSAK | C₄A₃SO₃ | 7.08 | 147 | 3.100 | 47.42 |
| Expansive agent | CSA/CaSO₄ dihydrate | 3.28 | 68 | 2.800 | 24.29 |
| Accelerating agent | Na₂CO₃ | 0.14 | 3.0 | 2.540 | 1.18 |
| Retardant agent | C₆H₈O₇ | 0.19 | 4.0 | 1.660 | 2.41 |
| Air-detraining agent | Organic Si powder | 0.01 | 0.25 | 1.000 | 0.25 |
| Air-entraining agent | MSC hollow microsphere s | 0.14 | 3.0 | 0.900 | 3.33 |
| | Rosin Blend | 0.005 | 0.1 | 1.000 | 0.10 |
| 0/4 sand | CaMg(CO₃)₂ | 55.54 | 1153 | 2.590 | 445.17 |
| Cement CEM IV A-V 42.5R | SiO₂, Fe₂O₃, CaO, MgO, Al₂O₃, K₂O, Na₂O | 16.42 | 341 | 3.040 | 112.17 |
| Polymeric fibres | Polyethylen e (PE) - (C2H4)n | 0.34 | 7 | 0.900 | 7.78 |

| Added to rehydrate the premixed mortar to be rehydrated at the time of use | | | | | |
|---|---|---|---|---|---|
| Water | H₂O | 10.79 | 224 | 1.000 | 224.00 |

In order also to be able to carry out comparative experiments, cementitious conglomerates were prepared using a commercial premixed mortar to be rehydrated having a standard composition differing from the one of the present invention as shown in the following table. The conglomerates thus obtained were identified with the name "REF".

**Table 2**

| Commercial premixed mortar compounds to be rehydrated | | Amount (% w/w) | Density (Kg/m³) | Specific weight (Kg/L) | Volume (L) |
|---|---|---|---|---|---|
| Common name | Chemical compound | | | | |
| Filler | CaCO₃ | 2.96 | 60 | 2.710 | 22.14 |
| Silica fume | SiO₂ | 0.74 | 15 | 2.200 | 6.82 |
| Superplastici zer | Polycarboxy late ether (PCE) | 0.22 | 4.5 | 1.000 | 4.50 |
| Rheology modifier | Exopolysac charide | 0.01 | 0.15 | 1.000 | 0.15 |
| Expansive agent | CaO | 1.48 | 30 | 2.800 | 10.71 |
| Air-entraining agent | Rosin Blend | 0.007 | 0.2 | 1.000 | 0.15 |
| 0/4 sand | SiO₂ | 61.32 | 1245 | 2.590 | 480.69 |
| Cement CEM I 52.5R | SiO₂, Fe₂O₃, CaO, MgO, Al₂O₃, K₂O, Na₂O | 22.16 | 450 | 3.040 | 148.03 |
| Polymeric fibres | Polypropyle ne (PP) - (C₃H₆)ₙ | 0.07 | 1.5 | 0.900 | 1.67 |

| Added to rehydrate the premixed mortar to be rehydrated at the time of use | | | | | |
|---|---|---|---|---|---|
| Water | H₂O | 11.03 | 224 | 1.000 | 224.00 |

In order to prepare both types of conglomerates, the premixed mortars to be rehydrated were mixed with the percentage of (potable) water indicated in the respective tables 1 and 2 relative to the weight of the dry product (i.e. of the dry premixed mortar). The mixtures were prepared in a laboratory at a temperature of 20 °C using a mortar mixer whose maximum yield volume per cycle was < 2.0 litres. Once the conglomerates had been obtained and hardened, the mechanical strength, both compressive and flexural, was characterized for each sample at the following time intervals: 1, 3, 7, 28, 60 and 90 days, including all the steps provided for by standard UNI 8984.

More specifically, the compressive strength was assessed according to standard UNI EN 12190 in conglomerates having a cubic shape and a size of 40x40x40 mm, whilst the flexural strength was assessed according to standard UNI EN 196-1 in conglomerates shaped like a beam with a size of 40x40x160 mm. The following table shows the results obtained for the two tests, both in the case of the conglomerates obtained with the mortar according to the present invention and in the case of the conglomerates obtained from the standard mortars used for the comparison (REF).

**Table 3**

| Days | **Compressive strength (UNI EN 12190)*** - **MPa** | | **Flexural strength (UNI EN 196-1)*** - **MPa** | |
|---|---|---|---|---|
| | TM Mk 5.0-14 | REF | TM Mk 5.0-14 | REF |
| 1 | 40.75 | 12.63 | 8.63 | 1.53 |
| 3 | 45.91 | 20.75 | 9.12 | 4.82 |
| 7 | 52.41 | 24.84 | 10.21 | 5.92 |
| 28 | 71.25 | 36.85 | 11.70 | 6.12 |
| 60 | 76.34 | 44.25 | 12.26 | 6.86 |
| 90 | 82.38 | 47.05 | 12.66 | 7.09 |

| | | | | |
|---|---|---|---|---|
| * For both tests, the samples were cured in water at a temperature of 20 °C ± 2 °C. | | | | |

For the purpose of assessing the expansive properties of the mortar according to the present invention, again compared to the reference mortar REF, free expansion tests were initially performed in the plastic phase (i.e. following the addition of water) according to standard UNI 8996. The results obtained are shown in the following table.

**Table 4**

| | TM Mk 5.0-14 | REF |
|---|---|---|
| **Free expansion (UNI 8996)** | 0.32% | 0.08% |

Furthermore, restrained expansion tests were conducted as required by standard UNI 8147 (methods A and B); the values are shown in the following table.

**Table 5**

| Days | **Restrained expansion test (UNI 8147) Method B** - Linear variation µm/m** | | **Restrained expansion test (UNI 8147) Method A* - Linear variation µm/m** |
|---|---|---|---|
| | TM Mk 5.0-14 | REF | TM Mk 5.0-14 |
| 0 | 0 | 0 | 0 |
| 1 | 592 | 28 | 285 |
| 2 | 691 | -32 | 451 |
| 3 | 656 | -48 | 497 |
| 4 | 572 | -104 | 560 |
| 5 | 478 | -116 | 562 |
| 6 | 436 | -128 | 580 |
| 7 | 428 | -223 | 582 |
| 14 | 385 | -317 | 610 |
| 28 | 279 | -619 | 748 |
| 60 | 156 | -722 | 812 |
| 90 | 92 | -810 | 861 |

| | | | |
|---|---|---|---|
| *Method A: Curing in lime-saturated water at a temperature of 20 °C **Method B: Protection of samples for 48 hours with polyethylene film at a temperature of 20 °C and subsequent exposure, until the end of the test, to an unsaturated environment consisting of T = 20 °C and relative humidity (R.H.) = 55%. | | | |

It should be noted that the positive values in the aforesaid Table 5 refer to expansion, whereas the negative ones refer to shrinkage.

As may be appreciated from the results shown in the table, though shrinkage exerts its own stress, the tensile stresses that would be induced in such a situation are completely compensated for by the residual triaxial compression, which, after 90 days, i.e. the threshold beyond which TM Mk 5.0-14 has already gone through the largest portion of shrinkage, remains at positive values.

### Example 2 - Characterization of mechanical properties and properties of resistance to chemical agents

In order to carry out further physicochemical characterizations, cementitious conglomerates were prepared from the mortar having the composition as shown in Table 1, duly rehydrated as described in Example 1. Three test specimens having prism dimensions as shown in the following table (Table 6) were tested to assess the elastic modulus thereof (according to standard UNI EN 13412).

The results are shown in the following table.

**Table 6**

| Test specimen | Length (mm) | Base (mm) | height (mm) | **Compressive elastic modulus E (N/mm²)** |
|---|---|---|---|---|
| 1 | 160 | 40 | 40 | 46383 |
| 2 | 160 | 40 | 40 | 44251 |
| 3 | 160 | 40.6 | 40 | 47365 |

Seven test specimens (called TM Mk 5.0-14) having a cubic shape and dimensions of 40x40x40 mm were subsequently prepared. After being weighed, the test specimens were immersed for 1000 hours in different liquids according to the following criteria. Specimens 1, 2 and 3: immersed in demineralised water at a temperature of 40 °C ± 2 °C. Specimens 4 and 5: immersed in semi-synthetic lubricant oil for internal combustion engines (called 10W/40 oil) at a temperature of 23 °C ± 2 °C. Specimens 6 and 7: immersed in unleaded fuel at a temperature of 23 °C ± 2 °C.

After the aforesaid period of time, the test specimens were removed from the immersion and left exposed to air for 24 hours. Immediately afterwards, the difference in weight of each specimen was recorded and compression tests were performed according to standard UNI EN 12190. The results obtained are shown in the following tables (Tables 7 and 8).

**Table 7 - Difference between the weight of the test specimens before and after 1000 hours of immersion**

| Immersion | Test specimen TM Mk 5.0-14 | Initial weight (g) | Final weight (g) | Differenc e (g) | Damage |
|---|---|---|---|---|---|
| Water 40 °C | 1 | 148.96 | 149.53 | 0.57 | none |
| | 2 | 150.70 | 151.12 | 0.42 | none |
| | 3 | 149.78 | 150.14 | 0.36 | none |
| 10W/40 Oil | 4 | 147.30 | 147.71 | 0.41 | none |
| | 5 | 149.78 | 149.91 | 0.13 | none |
| Unleaded fuel | 6 | 150.78 | 149.68 | -1.10 | none |
| | 7 | 148.38 | 147.26 | -1.12 | none |

**Table 8 - Determination of compressive strength in 40x40x40mm cubes after 1000 hours of immersion (UNI EN 12190)**

| **Compressive strength** | | | | Mean value |
|---|---|---|---|---|
| Immersion liquid | N/mm² | N/mm² | N/mm² | N/mm² |
| Water 40 °C | 85.84 | 88.60 | 82.16 | 85.53 |
| Unleaded fuel | 78.48 | 82.47 | \ | 80.47 |
| 10W/40 Oil | 78.48 | 77.25 | \ | 77.87 |

In the case of the test specimens immersed in demineralised water at a temperature of 40 °C ± 2 °C (Test specimens 1, 2 and 3), the capillary absorption of water according to standard UNI EN 13057:2003 was also determined. The results are shown in the following table and in Figure 1.

**Table 9**

| **Determination of capillary absorption** - **UNI EN 13057** | | | | | | | |
|---|---|---|---|---|---|---|---|
| Time (minutes) | Square root of time (h^{0.5}) | Absorption of water per unit of surface (kg/m²) | | | Mean (kg/m²) | Wet front at 2 hours (mm) | S (kg/(m²x h^{0,5}) |
| | | Test specimen 1 | Test specimen 2 | Test specimen 3 | | | |
| 0 | 0 | 0 | 0 | 0 | 0 | 13 | 0.28 |
| 12 | 0.4 | 0.31 | 0.28 | 0.28 | 0.29 | | |
| 30 | 0.7 | 0.40 | 0.38 | 0.36 | 0.38 | | |
| 60 | 1.0 | 0.49 | 0.46 | 0.45 | 0.46 | | |
| 120 | 1.4 | 0.57 | 0.57 | 0.54 | 0.56 | | |
| 240 | 2.0 | 0.67 | 0.66 | 0.62 | 0.65 | | |
| 480 | 2.8 | 0.75 | 0.79 | 0.74 | 0.76 | | |
| 1440 | 4.9 | 0.81 | 0.96 | 0.88 | 0.88 | | |

In order to determine the thermal compatibility (according to standard EN 13687-1) and the behaviour of the conglomerates according to the present invention with freeze/thaw cycling in de-icing salts, a layer of mortar according to the present obtained as described in the Example 1 (TM Mk 5.0-14) was applied on three 300 mm x 300 mm x 100 mm concrete test specimens (e.g. concrete platform type MC 0.40 conforming to standard UNI EN 1766). All the surfaces of the test specimens were coated, except for the test face, with a thermosetting resin in order to avoid the penetration of liquid into the sides and rear of the concrete test specimen during the test. The following table 10 shows the results obtained related to the determination of the thermal compatibility (according to standard EN 13687-1) and the behaviour of the conglomerates according to the present invention with freeze/thaw cycling in de-icing salts together with the tests for the determination of bond strength by pull-off according to standard UNI EN 1542 in the reference test specimen and the test specimens subjected to freeze/thaw cycling together with indications of the respective pull-off modes.

**Table 10**

| Test specimen | Size (mm) | Thickness (mm) | No. of cycles carried out | Surfaces alterations | PULL-OFF UNI EN 1542 (MPa) |
|---|---|---|---|---|---|
| 1 | 300x300x100 | 15 | None | - | 3.44 |
| 2 | 300x300x100 | 15 | 50 | None | 3.13 |
| 3 | 300x300x100 | 15 | 50 | None | 3.51 |

| | | | | | |
|---|---|---|---|---|---|
| Notes: Supporting substrate consisting of a concrete platform type MC (0.40) conforming to standard UNI EN 1766 coated with a 15 mm-thick layer of TM Mk 5.0-14 mortar. The tests were performed on test specimens prepared in a laboratory. Curing: according to UNI EN 13687-1 Appendix A for mortars type CC. Specimen no.1: test specimen. Specimens nos. 2 and 3: specimens subjected to 50 alternating freeze/thaw cycles in the presence of saline solution. Saline solution used: saturated sodium chloride. Every 10 cycles, and at the end of the 50 cycles provided for, the test specimens were observed in order to detect any surface alterations as provided for by standard UNI EN13687-1. At the end of the 50 cycles, a bond strength (pull-off) test was performed on all the test specimens on the basis of what is provided for by standard UNI EN 1542. | | | | | |

The results showed that, even after 50 freeze/thaw cycles, the conglomerates according to the present invention maintain intact their adhesion properties, thus showing to be ideal for bedding railway platforms.

## Claims

1. A composition comprising:
- a first mineral addition comprising at least one calcium carbonate (CaCO₃) filler;
- a second mineral addition selected from the group consisting of: microsilica (SiO₂), fly ash, blast furnace slag, pozzolan, geopolymers, and a combination thereof;
- at least one superplasticizer selected from the group of polycarboxylate ethers (PCE), preferably methacrylate substituted with polyoxymethylene;
- at least one shrinkage reducing admixture (SRA) selected from a glycol- or polyglycol-based anti-shrinkage additive, preferably selected from the group consisting of: hexylene glycol, polypropylene glycol, neopentyl glycol, polyoxypropylene glycol, and a combination thereof;
- at least one rheology modifier selected from the group of exopolysaccharides, preferably selected from the group consisting of: Welan gum, gellan gum, or a combination thereof;
- at least one expansive agent selected from among calcium sulphoaluminate (CSA), calcium sulphate dihydrate, calcium oxide (CaO), magnesium oxide (MgO), and a combination thereof;
- anhydrite (anhydrous calcium sulphate); and
- at least one calcium sulphoaluminate clinker (CSAK).

2. Composition according to claim 1, further comprising:
- at least one accelerating agent selected from the group consisting of potassium thiocyanate, sodium carbonate, lithium carbonate, and a combination thereof; and/or
- at least one retardant agent selected from the group consisting of citric acid, tartaric acid, gluconates, and a combination thereof; and/or
- at least one defoaming agent selected from the group consisting of: organic silicon powder, modified polydimethylsiloxane, or a combination thereof.

3. Composition according to claim **1** or **2,** further comprising an additive allowing the formation of a plurality of micrometric air bubbles within the composition, said additive being selected from: synthetic detergents, lignin sulphonate salts, petroleum acids, organic salts of sulphonated hydrocarbons, vinsol resin, wood resin salts (Rosin Blend), mesoporous single crystal (MSC) hollow microspheres, preferably PVC hollow microspheres, and a combination thereof.

4. Composition according to claim **1,** wherein:
- said first mineral addition is present in an amount between 5 and 30% w/w;
- said second mineral addition is present in an amount between 1 and 11% w/w;
- said at least one superplasticizer is present in an amount between 1 and 5% w/w;
- said at least one anti-shrinkage additive is present in an amount between 1 and 5% w/w;
- said at least one rheology modifier is present in an amount between 0.01 and 2% w/w;
- said at least one expansive agent is present in an amount between 5 and 40% w/w;
- said anhydrite is present in an amount between 5 and 35% w/w; and
- said at least one calcium sulphoaluminate clinker is present in an amount between 5 and 35% w/w.

5. Composition according to claim **2,** wherein:
- said at least one accelerating agent is present in an amount between 0.01 and 2 % w/w; and/or
- said at least one retardant agent is present in an amount between 0.01 and 2% w/w; and/or
- said at least one defoaming agent is present in an amount between 0.01 to 2% w/w.

6. Composition according to claim 3, wherein said additive allowing the formation of a plurality of micrometric air bubbles is present:
- in an amount between 0.01 to 5 % w/w if said additive is selected from synthetic detergents, lignin sulphonate salts, petroleum acids, organic salts of sulphonated hydrocarbons, vinsol resin, wood resin salts (Rosin Blend), and a combination thereof;
- in an amount between 1 and 5% w/w if said additive is hollow MSC (mesoporous single crystal) microspheres, preferably hollow PVC microspheres.

7. Use of the composition according to any one of claims **1** to **6** as an additive for mortars, preferably for expansive mortars for injection or pouring, selected from mortars for bedding and/or anchoring and/or grouting and/or sealing, more preferably mortars for bedding and/or anchoring and/or grouting and/or sealing of railway platforms or an element thereof, preferably of pre-stressed railway platforms, more preferably of ballastless railway platforms.

8. A Mortar comprising the composition according to any one of claims **1** to **6,** cement, polymeric fibres and aggregates, said aggregates being selected from the group consisting of: stones, artificial aggregates, sand endogenous rocks, exogenous rocks, expanded clay, glass, or a combination thereof, said mortar being a mortar in dry form to be rehydrated.

9. Mortar obtained by mixing the composition according to any one of claims **1** to **6** with water, cement, polymeric fibres and aggregates, said aggregates being selected from the group consisting of: stones, artificial aggregates, sand, endogenous rocks, exogenous rocks, expanded clay, glass, or a combination thereof.

10. Mortar according to claim **8** or **9,** wherein said cement is selected from the group consisting of: Portland cement, composite cement, OPC Ordinary Portland cement according to EN 197-1, UNI 9156, UNI 9606, ASTM C150, ASTM C595, JIS R 5210-5211-5212-5213-5214, or a combination thereof.

11. Mortar according to any one of claims **8** to **10,** wherein said polymeric fibres are selected from the group consisting of polyolefin polymers, polyethylene fibres, polypropylene fibres, aromatic polyamides, aliphatic polyamides, or a combination thereof.

12. Mortar according to any one of claims **8** to **11,** wherein said composition according to any one of claims **1** to **6** is added in an amount between 2 to 20 % w/w; said water is added in an amount between 5 to 15 % w/w; said cement is added in an amount between 10 to 35 % w/w: said polymeric fibres are added in an amount between 0.1 to 5 % w/w; and said aggregates are added in an amount between 20 to 80 % w/w.

13. Mortar according to any one of claims **8** to **12,** said mortar being an expansive mortar for injection and **characterized by** possessing a compensated shrinkage of more than 500 µm/m, preferably between 1000 µm/m and 2000 µm/m.

14. Use of the mortar according to any one of claims **8** to **13** for the execution of cementitious works, preferably bedding and/or anchoring and/or grouting and/or sealing, even more preferably for the bedding and/or anchoring and/or grouting and/or sealing of railway platforms or an element thereof, preferably pre-stressed railway platforms, more preferably ballastless railway platforms.

15. A cementitious conglomerate made from mortar according to any one of claims **8** to **13** and **characterized by** possessing at least one of the characteristics:
(a) resistance to chemical attack, preferably by chlorides and/or sulphates and/or hydrocarbons and lubricating oils;
(b) capillary absorption ≤ 0.5 kg/m2 · h0.5;
(c) resistance to the hydrodynamic phenomenon of pumping of the sub-slab layers;
(d) resistance to water, preferably to water comprising one or more of Na+, Mg²⁺, Br, Cl⁻, SO₄²⁺, K⁺, Ca²⁺ ions;
(e) resistance to thermal shock and freeze/thaw cycles, preferably resistance to more than 50 freeze/thaw cycles;
(f) tensile strength greater than 2.0 MPa, preferably greater than 2.5 MPa;
(g) compressive elastic modulus ≥ 20 Gpa, preferably ≥ 40 Gpa more preferably ≥ 50 GPa after 28 days of curing;
(h) compressive strength according to UNI EN 12190 ≥ 40 MPa after 1 day of curing, ≥ 50 Mpa after 7 days of curing and ≥ 70 MPa after 28 days of curing;
(i) flexural strength according to UNI EN 196-1 ≥ 6.0 MPa after 1 day of curing and ≥ 10 Mpa after 28 days of curing.
